# EUROPEAN PATENT APPLICATION

(11) **EP 4 593 458 A1**
(43) Date of publication of application: **30.07.2025**
(21) Application number: 24153945.1
(22) Date of filing: 25.01.2024
(51) Int. Cl.: H04W 28/26

(54) **METHOD AND SYSTEM FOR PROVIDING A SPECIFIC CONNECTIVITY QUALITY OF SERVICE ALONG A ROUTE OF A VEHICLE**

(71) Applicant: Volkswagen Aktiengesellschaft, 38440 Wolfsburg (DE)
(72) Inventor: Montero Bayo, Luca, 10249 Berlin (DE); Pfadler, Andreas, 13357 Berlin (DE)

(57) **Abstract**

The invention relates to a method for providing a specific connectivity quality of service along a route of a vehicle (50-x), comprising, for at least one vehicle (50-x):
- transmitting route information (4-x) and a definition (5-x) of a minimum required connectivity quality of service along the route to a service management server (2) by a user equipment (3-x) of the vehicle (50-x);
- managing and reserving the required connectivity quality of service along the route of the vehicle (50-x) by allocating communication resources along the route by the service management server (2), the service management server (2) being configured to allocate communication resources of a plurality of mobile network operators (10-x) by interfacing and communicating with these mobile network operators (10-x);
- providing and transmitting feedback information (6-x) to the user equipment (3-x) with regard to the availability of the required connectivity quality of service along the route.

Further, the invention relates to a system (1) for providing a specific connectivity quality of service along a route of a vehicle (50-x).

## Description

The invention relates to a method and a system for providing a specific connectivity quality of service along a route of a vehicle.

User Equipment (UE) in mobile communications are capable of contacting a Predictive Quality of Service (PQoS) server to obtain a PQoS profile, with which UEs can determine the availability and performance of a given service.

Nevertheless, the PQoS profile received always depends on factors which are beyond control of the UE, such as network load. In the case of UEs requiring a specific level of link quality for a given service (e.g. tele-operated driving uplink datarate), basing the performance of the service - which is critical for the application - on a prediction may not be enough.

The quality of service (QoS) requirements of certain applications, such as, tele-operated driving, require the UE to connect to at least two mobile network operators (MNOs). The reason may be that redundancy is required or that one MNO is not able to fulfill e.g. the high throughput in the uplink and load balancing between different MNOs is needed.

A potential solution to ensure a certain level of link quality is the 5G-enabled network slicing, which allows different services or use cases to make use of different network features, decomposed and reserved for such use. Nevertheless, conventional slicing may lack the dynamism needed by moving vehicles, which renders it inefficient as the requirements for vehicles are inherently location-based, in particular when multiple MNOs are required.

US 2020 / 0 221 349 A1 describes a vehicle communication system, which includes: a vehicle communication apparatus for a vehicle; a management apparatus that manages a wireless resource; and a request transmitter that transmits a resource allocation request to the management apparatus for requesting allocation of a location resource and the wireless resource by time. The vehicle communication apparatus includes: a vehicle transmitter, a vehicle receiver, and a vehicle communication controller that corresponds to a vehicle processor, and controls the vehicle transmitter and the vehicle receiver. The management apparatus includes: a management apparatus receiver that receives the resource allocation request, an allocator that corresponds to a management processor, and allocates the location resource and the wireless resource by time, and a management apparatus transmitter that transmits an allocation result of the allocator.

The invention is based on the technical problem of providing a solution for providing a specific connectivity quality of service along a route of a vehicle.

According to the invention, the technical problem is solved by the subject matter of the independent claims. Advantageous embodiments of the invention emerge from the dependent claims.

In particular, a method is provided for providing a specific connectivity quality of service along a route of a vehicle, comprising, for at least one vehicle:
- transmitting route information and a definition of a minimum required connectivity quality of service along the route to a service management server by a user equipment of the vehicle;
- managing and reserving the required connectivity quality of service along the route of the vehicle by allocating communication resources along the route by the service management server, the service management server being configured to allocate communication resources of a plurality of mobile network operators by interfacing and communicating with these mobile network operators;
- providing and transmitting feedback information to the user equipment with regard to the availability of the required connectivity quality of service along the route.

Further, in particular a system is provided for providing a specific connectivity quality of service along a route of a vehicle, comprising a service management server and at least one user equipment of a corresponding vehicle, the at least one user equipment being configured to transmit route information and a definition of a minimum required connectivity quality of service along the route to the service management server; and the service management server being configured to manage and reserve the required connectivity quality of service along the route of the vehicle by allocating communication resources along the route, the service management server being therefore configured to allocate communication resources of a plurality of mobile network operators by interfacing and communicating with these mobile network operators, and to provide and transmit feedback information to the at least one user equipment with regard to the availability of the required connectivity quality of service along the route.

The method and the system advantageously allow to provide a specific connectivity quality of service along a route of a vehicle, thus enabling advanced applications, such as remote (i.e. tele-operated) driving by an automated or human driver. One of the key conceptional elements is that the route the vehicle follows is known beforehand, such that required communication services can be managed and allocated according to this route. Another of the key conceptional elements is that communication resources of a plurality, in particular all, mobile network operators at least in a given region can be managed and allocated by a central mechanism, namely by the service management server. To exploit the information about the route the vehicle is going to follow, route information and a definition of a minimum required connectivity quality of service along the route is transmitted by a user equipment of the vehicle to the service management server. The user equipment is, for example, a navigation device or a control device of the vehicle. However, in principle the user equipment may also be a mobile device, such as a tablet computer or a smartphone.

The service management server receives the transmitted route information and the definition from the user equipment. In particular, the service management server receives said route information and the definition of a plurality of vehicles, each requesting a specific connectivity quality of service along a respective route. The service management server manages and reserves the required connectivity quality of service along the route of the vehicle by allocating communication resources along the route. For this purpose, the service management server is being configured to allocate communication resources of a plurality of mobile network operators (MNO) by interfacing and communicating with these mobile network operators. In particular, the service management server allocates individual communication resources of the mobile network operators. If not enough communication resources can be provided by the mobile network operators, the communication resources may be allocated according to a first-come-first-served-scheme or in a more equal way by lowering the available communication resources for every request. For the purpose of the allocation, optimization methods may be used in order to optimize the allocation of the available communication resources and distributing them across a plurality of vehicles.

After allocating the communication resources for a vehicle, the service management server provides and transmits feedback information to the user equipment with regard to the availability of the required connectivity quality of service along the route. If the reservation was successful, i.e. the requested connectivity quality of service can be provided, the feedback information comprises a positive feedback. If the reservation was not successful, i.e. the requested connectivity quality of service cannot be provided, the feedback information comprises a negative feedback.

Parts of the system, in particular the user equipment and/or the service management server, can be embodied individually or collectively as a combination of hardware and software, for example as program code that is executed on a microcontroller or microprocessor. However, it is also possible for parts to be embodied individually or collectively as an application-specific integrated circuit (ASIC) and/or field-programmable gate array (FPGA). Particularly, the service management server comprises at least one processing device (e.g. a microprocessor) and at least one memory and at least one communication interface. Particularly, each user equipment comprises at least one processing device (e.g. a microprocessor) and at least one memory and at least one communication interface.

The communication resources may be one or more of the following: 2G, 3G, LTE, LTE+ (4G), 5G, WLAN, Wi-Fi etc. The communication resources may also be based on satellite communication. The communication resources are, in particular, allocated in the form of time slots with regard to a defined region or area.

In one embodiment, the route information comprises the route to be followed by the vehicle as a set of waypoints and the arrival time at which the vehicle will be at each waypoint. This allows the service management server to precisely allocate the communication resources to the regions which coincide with the individual waypoints at or around the respective arrival times. The more precisely the route is provided the more precisely the communication resources can be allocated.

In one embodiment, the route information further comprises a tolerance margin around the arrival time at each waypoint and/or a tolerance margin is assigned to the arrival time at each waypoint, wherein the service management server allocates the communication resources in consideration of the tolerance margins. This allows to provide the requested connectivity quality of service in a time window spanning around the arrival time, such that deviations resulting from traffic and/or other causes may not lead to loss of the required connectivity quality of service. For example, the margin around the specified arrival time of a waypoint may span seconds or minutes, for example +/- 1 minute.

In one embodiment, the definition of the minimum required connectivity quality of service comprises one or more of a link quality of service, a dedicated network slice, a redundancy requirement. This allows to precisely define the technological requirements that are necessary to provide a particular application and/or service in the vehicle with respect to the required connectivity quality of service. The link quality of service comprises, in particular, latency, reliability and/or throughput requirements. A redundancy requirement comprises, in particular, multi-radio access technology (RAT), multi-MNO and/or physically independent radio path requirements.

In one embodiment, an application and/or a service of the vehicle is locked or unlocked for the route by the user equipment based on the feedback information. This allows to provide only those applications and/or services for which the requested connectivity quality of service can be provided. Consequently, other applications and/or services for which this is not the case are not provided and may not be used by the user and/or the vehicle. This greatly enhances the reliability of the applications and/or services used in the vehicle. For example, if the requested connectivity quality of service can be provided, the user equipment may unlock a remote driving application and/or remote driving service for the route. However, if the requested connectivity quality of service cannot be provided, the user equipment may lock the remote driving application or service for the route (or keep it locked).

In one embodiment, the vehicle additionally transmits a priority information to the service management server, wherein allocating the communication resources is carried out in consideration of the priority information. The priority information allows to rank the requests received from multiple vehicles and allocating limited communication resources. In particular, the vehicles with higher priorities may be prioritized when allocating the communication resources.

In one embodiment, the priority information comprises a vehicle operating mode information. This allows to take a current state of the vehicle into account. For example, a vehicle which is currently operated in a remote guidance mode, in which the vehicle is driven remotely by an automated or human driver, may be assigned the highest priority since its connectivity requirements a vital for the current operating state. Another example is a vehicle which is driven in an local automated mode and which encounters a problem with a component. The function of the component may be instantly replaced by a remote component. However, for the replacement a specific connectivity quality of service is necessary. Due to the fault of the component, the vehicle is assigned a higher priority in order to ensure operation of the vehicle. In this way at least the following modes may be used with regard to the priority information: normal operating mode (low or medium priority), remotely operating mode (highest priority), emergency or failure mode (highest priority) etc.

In one embodiment, the priority information comprises a vehicle class information. This allows to take vehicle classes into account. For example, an ambulance, a fire truck and/or police car may be assigned a higher priority when on duty. The specific connectivity quality of service for these vehicle classes can then be provided with a higher priority.

In one embodiment, the feedback information comprises one or more of identifiers to proceed with upcoming handovers and/or a physical layer configuration to reach the required connectivity quality of service. This allows to directly provide information necessary to adapt and/or configure the user equipment on the vehicle side, so that the required connectivity quality of service can be provided along the route without interruption.

Additional embodiments of the system are derived from the description of embodiments of the method. The advantages of the system are the same in each case as in the embodiments of the method.

The invention is explained in greater detail below on the basis of preferred exemplary embodiments with reference to the drawings. In the drawings:
- Fig. 1: shows a schematic of an embodiment of the system for providing a specific connectivity quality of service along a route of a vehicle;
- Fig. 2: shows a schematic diagram of an embodiment of the method for providing a specific connectivity quality of service along a route of a vehicle.

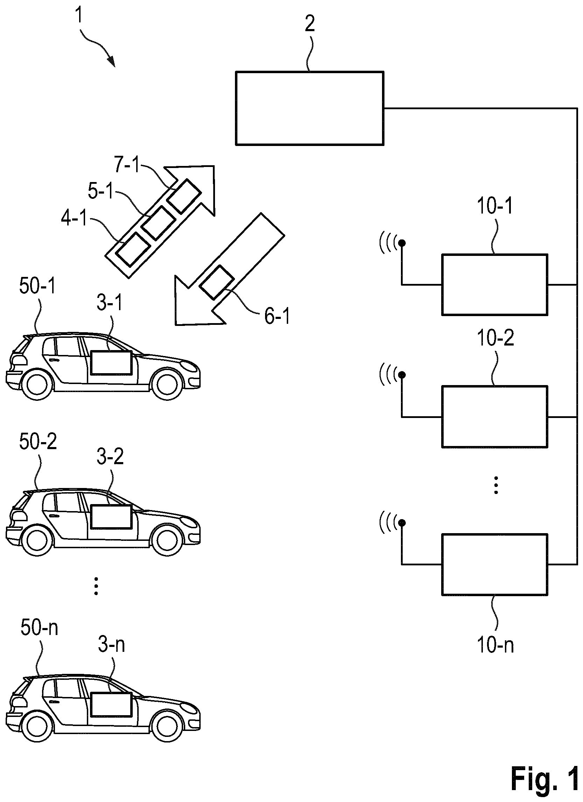

Fig. 1 shows a schematic of an embodiment of the system 1 for providing a specific connectivity quality of service along a route of a vehicle 50-x. The system 1 is configured to execute the method described in this disclosure.

The system 1 comprises a service management server 2 and at least one user equipment 3-x of a corresponding vehicle 50-x. The user equipment 3-x may be part of other devices of the vehicle 50-x.

The user equipment 3-x comprises at least one processing device (not shown) and at least one memory (not shown), wherein the processing device is configured to execute operations necessary to perform at least part of the method tasks. Further, the user equipment 3-x comprises a communication interface (not shown) for communicating with the service management server 2 and base stations of mobile network operators 10-x during regular operation.

The user equipment 3-x is configured to transmit route information 4-x and a definition 5-x of a minimum required connectivity quality of service along the route to the service management server 2.

The service management server 2 comprises at least one processing device (not shown) and at least one memory (not shown), wherein the processing device is configured to execute operations necessary to perform at least part of the method tasks. Further, the service management server 2 comprises a communication interface (not shown) for communicating with the user equipment 3-x and the mobile network operators 10-x.

The system 1 may also comprise the mobile network operators 10-x.

The service management server 2 is configured to manage and reserve the required connectivity quality of service along the route of the vehicle 50-x by allocating communication resources along the route. Therefore, the service management server 2 is configured to allocate communication resources of a plurality of mobile network operators 10-x by interfacing and communicating with these mobile network operators 10-x. As a result of successful allocation, the mobile network operators 10-x provide the required connectivity quality of service along the route at the required time.

Further, the service management server 2 is configured to provide and transmit feedback information 6-x to the at least one user equipment 3-x with regard to the availability of the required connectivity quality of service along the route.

The route information 4-x may comprise the route to be followed by the vehicle 50-x as a set of waypoints and the arrival time at which the vehicle 50-x will be at each waypoint.

The route information 4-x may further comprise a tolerance margin around the arrival time at each waypoint and/or a tolerance margin may be assigned to the arrival time at each waypoint, wherein the service management server 2 allocates the communication resources in consideration of the tolerance margins. The tolerance margin may have a value of seconds or minutes, e.g. 1 minute. The tolerance margin may be assigned in both directions of the arrival time (e.g. +/-1 minute).

The definition 5-x of the minimum required connectivity quality of service may comprise one or more of a link quality of service, a dedicated network slice, a redundancy requirement.

An application and/or a service of the vehicle 50-x may be locked or unlocked for the route by the user equipment 3-x based on the feedback information 6-x.

The vehicle may additionally transmit a priority information 7-x to the service management server 2, wherein allocating the communication resources is carried out in consideration of the priority information 7-x. In particular, vehicles 50-x with higher priority may be prioritized when allocating the communication resources.

The priority information 7-x may comprise a vehicle operating mode information.

The priority information 7-x may comprise a vehicle class information.

The feedback information 6-x may comprise one or more of identifiers to proceed with upcoming handovers and/or a physical layer configuration to reach the required connectivity quality of service. The user equipment 3-x uses the identifiers to handle the handovers between different base stations of the mobile network operators 10-x and implements the physical layer configuration at its communication interface.

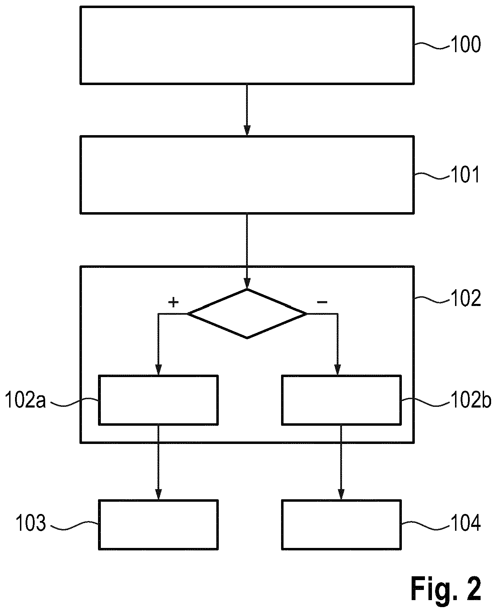

Fig. 2 shows a schematic diagram of an embodiment of the method for providing a specific connectivity quality of service along a route of a vehicle.

In task 100, route information and a definition of a minimum required connectivity quality of service along the route is transmitted to a service management server by a user equipment of the vehicle. Beforehand, the user equipment may gather the route information and the definition from a navigation device and/or control device of the vehicle. The request for a specific connectivity quality of service may be triggered, for example, by the navigation device or the control device after a user specifies a destination and the navigation device has determined the route to the destination.

In particular, the route information comprises the route to be followed by the vehicle as a set of waypoints and the arrival time at which the vehicle will be at each waypoint. In particular, the route information further comprises a tolerance margin around the arrival time at each waypoint and/or a tolerance margin is assigned to the arrival time at each waypoint, wherein the service management server allocates the communication resources in consideration of the tolerance margins.

In particular, the definition of the minimum required connectivity quality of service comprises one or more of a link quality of service, a dedicated network slice, a redundancy requirement.

In task 101, the service management server manages and reserves the required connectivity quality of service along the route of the vehicle by allocating communication resources along the route. To this end, the service management server communicates with a plurality of mobile network operators over a communication interface. Allocating the communication resources may comprise, for example, determining in each case the closest available base station of the mobile network operators to a waypoint along the route and trying to reserve the communications resources, i.e. the required communication services of the mobile network operator, at the determined base station for the time the vehicle will pass the respective waypoint. If one mobile network operator is not able to provide the required communication resources, the service management server may try to reserve the communication resources from another mobile network operator able to provide the communication resources at the respective way point.

In task 102, feedback information to the user equipment with regard to the availability of the required connectivity quality of service along the route is provided and transmitted to the user equipment. If the required quality of service can be provided along the route, a positive feedback is transmitted to the user equipment in task 102a. If the required quality of service cannot be provided along the route, a negative feedback is transmitted to the user equipment in task 102b.

After receiving the feedback, the user equipment may lock or unlock an application and/or a service of the vehicle on the basis of the feedback. If a positive feedback is received the application and/or service is unlocked in task 103. If a negative feedback is received the application and/or service is locked (or kept locked) in task 104.

Further embodiments of the method have already been described with respect to the system.

### List of reference numerals

- 1: system
- 2: service management server
- 3-x: user equipment
- 4-x: route information
- 5-x: definition of a minimum required connectivity QoS
- 6-x: feedback information
- 7-x: priority information
- 10-x: mobile network operator (MNO)
- 50-x: vehicle
- 100-104: tasks of the method

## Claims

1. Method for providing a specific connectivity quality of service along a route of a vehicle (50-x), comprising, for at least one vehicle (50-x):
- transmitting route information (4-x) and a definition (5-x) of a minimum required connectivity quality of service along the route to a service management server (2) by a user equipment (3-x) of the vehicle (50-x);
- managing and reserving the required connectivity quality of service along the route of the vehicle (50-x) by allocating communication resources along the route by the service management server (2), the service management server (2) being configured to allocate communication resources of a plurality of mobile network operators (10-x) by interfacing and communicating with these mobile network operators (10-x);
- providing and transmitting feedback information (6-x) to the user equipment (3-x) with regard to the availability of the required connectivity quality of service along the route.

2. Method according to claim 1, **characterized in that** the route information (4-x) comprises the route to be followed by the vehicle (50-x) as a set of waypoints and the arrival time at which the vehicle (50-x) will be at each waypoint.

3. Method according to claim 2, **characterized in that** the route information (4-x) further comprises a tolerance margin around the arrival time at each waypoint and/or **in that** a tolerance margin is assigned to the arrival time at each waypoint, wherein the service management server (2) allocates the communication resources in consideration of the tolerance margins.

4. Method according to any one of the preceding claims, **characterized in that** the definition (5-x) of the minimum required connectivity quality of service comprises one or more of a link quality of service, a dedicated network slice, a redundancy requirement.

5. Method according to any one of the preceding claims, **characterized in that** an application and/or a service of the vehicle (50-x) is locked or unlocked for the route by the user equipment (3-x) based on the feedback information (6-x).

6. Method according to any one of the preceding claims, **characterized in that** the vehicle (50-x) additionally transmits a priority information (7-x) to the service management server (2), wherein allocating the communication resources is carried out in consideration of the priority information (7-x).

7. Method according to claim 6, **characterized in that** the priority information (7-x) comprises a vehicle operating mode information.

8. Method according to claim 6 or 7, **characterized in that** the priority information (7-x) comprises a vehicle class information.

9. Method according to any one of the preceding claims, **characterized in that** the feedback information (6-x) comprises one or more of identifiers to proceed with upcoming handovers and/or a physical layer configuration to reach the required connectivity quality of service.

10. System (1) for providing a specific connectivity quality of service along a route of a vehicle (50-x), comprising:
- a service management server (2), and
- at least one user equipment (3-x) of a corresponding vehicle (50-x),
the at least one user equipment (3-x) being configured to transmit route information (4-x) and a definition (5-x) of a minimum required connectivity quality of service along the route to the service management server (2); and
the service management server (2) being configured to manage and reserve the required connectivity quality of service along the route of the vehicle (50-x) by allocating communication resources along the route, the service management server (2) being therefore configured to allocate communication resources of a plurality of mobile network operators (10-x) by interfacing and communicating with these mobile network operators (10-x),
and to provide and transmit feedback information (6-x) to the at least one user equipment (3-x) with regard to the availability of the required connectivity quality of service along the route.
